# EUROPÄISCHE PATENTSCHRIFT

(11) **EP 0 676 858 B1**
(45) Veröffentlichungstag und Bekanntmachung des Hinweises auf die Patenterteilung: **03.06.1998**
(21) Anmeldenummer: 95104677.0
(22) Anmeldetag: 29.03.1995
(51) Int. Cl.: H02P 5/165

(54) **Einrichtung zur Optimierung des Drehzahlregelverhaltens eines Elektrokleinstmotors für zahnärztliche Zwecke**
Optimization apparatus for speed control of a miniature electric motor for dental use
Dispositif pour optimiser la régulation de la vitesse d'un moteur électrique miniature pour l'usage dentaire

(30) Priorität: 11.04.1994 DE 4412413
(43) Veröffentlichungstag der Anmeldung: 11.10.1995
(73) Patentinhaber: Sirona Dental Systems GmbH & Co.KG, 64625 Bensheim (DE)
(72) Erfinder: Pabst, Josef, D-68542 Heddesheim (DE)
(74) Vertreter: Isenbruck, Günter, Dr.

(56) Entgegenhaltungen:
- DE-C- 3 221 146
- AUTOMATISIERUNGSTECHNIK - AT, Bd. 36, Nr. 11, November 1988 MUNCHEN DE, Seiten 446-447, XP 000001520 L. ZBORAY ET AL 'Die Umschaltbedingungen für eine parallele Struktur mit Zustandsreglern'

## Beschreibung

Die Erfindung bezieht sich auf eine Einrichtung zur Optimierung des Drehzahlregelverhaltens eines Elektrokleinstmotors, wie er beispielsweise für den Antrieb zahnärztlicher Instrumente eingesetzt wird. Zur Steuerung und Regelung solcher Motoren sind an sich zwei Regelvorrichtungen bekannt, die beispielsweise in der DE-3 221 146 C1 beschrieben sind.
Bei der einen erfolgt die Regelung der Drehzahl über eine RI-Kompensation des inneren Spannungsabfalls des Motors. Der Motorstrom wird dabei in Abhängigkeit von der Motorlast gemessen. Bei Drehzahlrückgang infolge stärkerer Belastung wird ein höherer Motorstrom gemessen; umgekehrt steigt bei Belastungsrückgang die Drehzahl, wodurch ein kleinerer Motorstrom gemessen wird. Die gemessene Motorstromdifferenz wird auf eine Regeleinrichtung gegeben, die dann die Drehzahl auf den gewünschten Sollwert bringt. Der Vorteil dieser Motorregelung liegt in einem sehr ruhigen Laufverhalten des Motors bis in den oberen Drehzahlbereich. Nachteilig ist jedoch, daß im unteren, besonders aber im untersten Drehzahlbereich der Motor ein relativ kleines Drehmoment abgibt. Die Stromerhöhungen für eine Kompensationsmessung sind hier zu gering, dagegen machen sich die Kollektorverluste relativ stark bemerkbar.

Bei der zweiten bekannten Regeleinrichtung wird die Drehzahl mittels EMK (Elektromotorische Kraft) -Messung bei abgeschaltetem Motor ermittelt. Der Vorteil dieser Regelung liegt in einem sehr guten Drehmoment des Motors auch im untersten Drehzahlbereich. Die Regelung kann die Kollektorverluste gut ausregeln, wodurch Drehzahlen mit hohem Drehmoment bis auf Null geregelt werden können. Nachteilig bei diesem Regelverfahren ist, daß sich im oberen Drehzahlbereich unter Umständen ein unruhiger Lauf einstellen kann, der zu Vibrationen führen kann. Der Grund hierfür liegt in der systembedingten Motorabschaltung, die für die EMK-Messung notwendig ist.

Der Erfindung liegt die Aufgabe zugrunde, eine Einrichtung zu schaffen, die es ermöglicht, einen Elektrokleinstmotor, wie er vornehmlich für zahnärztliche Behandlungszwecke eingesetzt wird, so zu betreiben, daß er in jedem gewünschten Drehzahlbereich optimal regelbar ist, d.h. daß eine optimale Drehzahlregelung bei unterschiedlichen Belastungsmomenten, und zwar sowohl im unteren als auch im oberen Drehzahlbereich, unter Vermeidung der geschilderten Nachteile, gegeben ist.

Die Erfindung basiert auf der Erkenntnis, eine Steuerelektronik zu schaffen, die die beiden obengenannten Regeleinrichtungen in sich trägt und entsprechend verarbeiten kann. Die nachfolgend näher erläuterte Einrichtung kann anhand vorgegebener Motordaten vorteilhafterweise selbsttätig einen gleitenden Übergang von der EMK-Regelung in die RI-Regelung und umgekehrt vornehmen. Für den Anwender entfällt damit die Entscheidung, wann er zwischen den beiden Regelungsarten umschalten muß. Die für die Eingabe erforderlichen Motordaten, zum einen die Umschaltdrehzahl, zum anderen die maximale Drehzahl, mit der der Motor betrieben werden soll, können entweder fest vorgegeben oder vom Anwender selbst einzustellen sein.

Anhand der Zeichnung werden zwei Ausführungsformen der erfindungsgemäßen Einrichtung näher beschrieben.

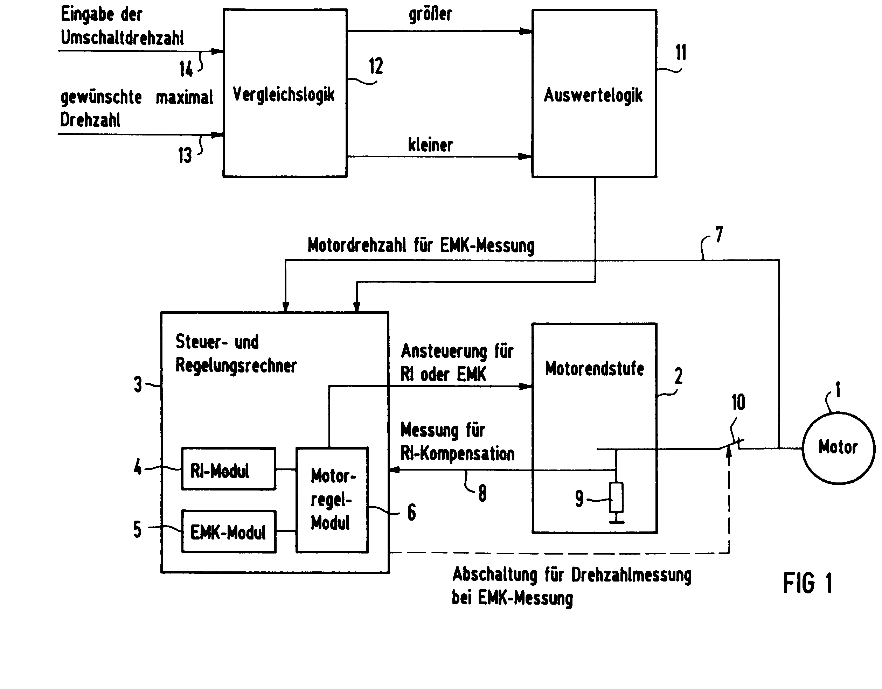

Die Figur 1 zeigt ein Blockschaltbild von der ersten Ausführungsform.

Der mit 1 bezeichnete Elektromotor wird von einer Endstufe 2 angesteuert, welche die Vorgaben aus einem Steuer- und Regelungsrechner 3 in Motordrehzahl und Motordrehmoment umsetzt. Der Rechner 3 enthält ein RI-Modul 4 und ein EMK-Modul 5. Das RI-Modul 4 verarbeitet die eingehenden Motordaten nach dem eingangs erläuterten RI-Kompensationsverfahren. Das EMK-Modul 5 verarbeitet die eingehenden Motordaten entsprechend der EMK-Messung. Das den beiden Modulen 4, 5 nachgeschaltete Motorregelmodul 6 ist mit der Motorendstufe 2 verbunden und steuert die Endstufe entweder nach dem RI- oder EMK-Regelverfahren an.

In den Rechner 3 werden über die Leitung 7 die für eine EMK-Messung notwendigen Motordrehzahldaten eingegeben; des weiteren über die Leitung 8 Informationen für die RI-Kompensation, die in bekannter Weise über einen Widerstand 9 erhalten werden. Vom Rechner 3 werden außerdem an die für eine EMK-Messung erforderlichen Stromabschaltmittel 10 entsprechende Steuerinformationen gegeben.

Mit 11 ist eine Auswertelogik bezeichnet, die entscheidet, ob eine EMK- oder RI-Regelung vorzusehen ist. Die für die Entscheidung notwendigen Vorinformationen werden von einer Vergleichslogik 12 geliefert, in der einerseits über einen Eingang 13 eine Information über die gewünschte maximale Drehzahl und andererseits über einen weiteren Eingang 14 eine Information über die gewählte Umschaltdrehzahl U, bei der von EMK- auf RI-Regelung umgeschaltet werden soll, eingegeben wird. Die Vergleichslogik 12 entscheidet, ob die aktuelle Drehzahl, also die Istdrehzahl, größer oder kleiner als die Umschaltdrehzahl U ist und gibt das Ergebnis an die Auswertelogik 11 weiter. Die Eingabe der Umschaltdrehzahl U kann vom Bediener an einem Paneel oder auch anderweitig eingegeben werden. Das gleiche gilt für die gewünschte maximale Drehzahl, mit der der Motor betrieben werden soll.

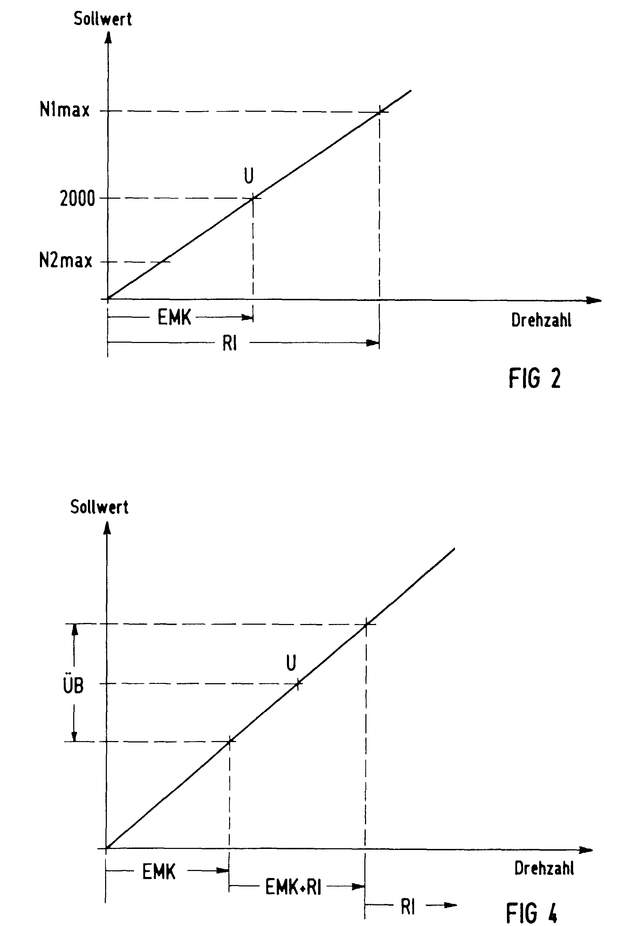

Anhand des Diagramms nach Figur 2 wird der Umschaltvorgang erläutert. Die Umschaltdrehzahl U, bei der von EMK auf RI und umgekehrt umgeschaltet wird, kann vom Benutzer festgelegt werden. Dieser Umschaltwert U soll beispielsweise bei einem (Soll-)Wert von 2.000 Upm liegen. Liegt die maximale Drehzahl N1max oberhalb der Umschaltdrehzahl U, beispielsweise bei 40.000 Upm, so erfolgt eine Regelung entsprechend der RI-Kompensation. Liegt dagegen die maximale Drehzahl N2max darunter, beispielsweise bei 800 Upm, so erfolgt eine Drehzahlregelung ausschließlich mittels EMK-Messung. Die Umschaltdrehzahl U kann vorteilhafterweise vom Benutzer individuell eingestellt werden. Zweckmäßig ist es jedoch, diese einmal beim Installieren eines zahnärztlichen Gerätes, in dem der Elektrokleinstmotor angewendet wird, fest einzustellen. Die maximal erwünschte Drehzahl kann während der Behandlung automatisch abgerufen oder auch manuell eingegeben werden. Befindet sich die gewünschte Drehzahl über der Umschaltdrehzahl U, wird die RI-Kompensation für den gesamten gewählten Drehzahlbereich benutzt. Wenn dagegen Arbeiten zu verrichten sind, die eine Drehzahl im unteren Drehzahlbereich erfordern, wird der Benutzer eine maximale Drehzahl unterhalb der Umschaltdrehzahl U wählen. Bei dieser Wahl wird automatisch die EMK-Regelung aktiviert, was zur Folge hat, daß auch im unteren Drehzahlbereich ein relativ hohes Drehmoment vom Motor 1 abgegeben wird.

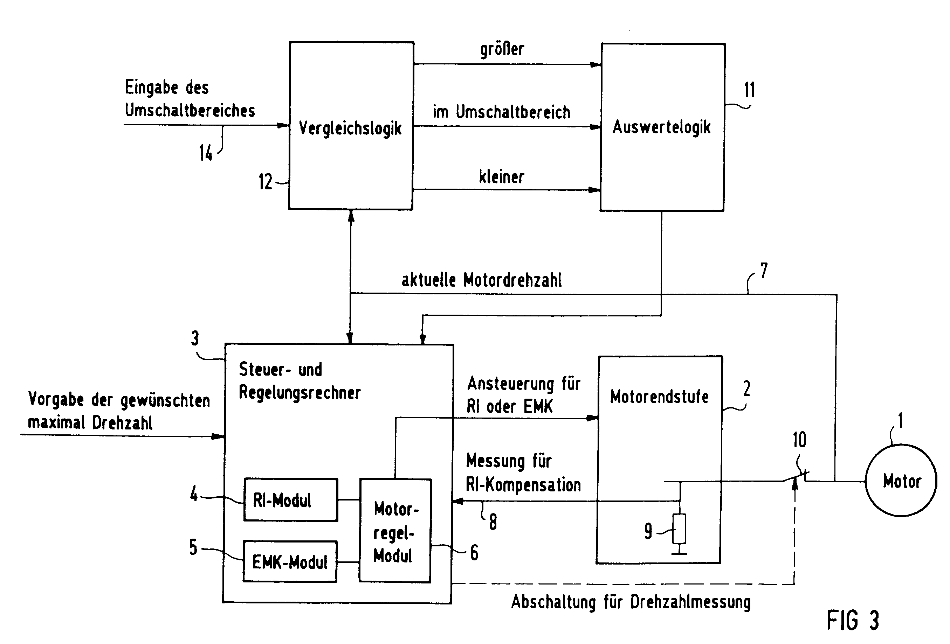

Die Figur 3 zeigt eine Ausführungsform, bei der die Anpassung an die beiden Steuer- bzw. Regelungsarten automatisch erfolgt.

Über den Eingang 14 der Vergleichslogik 12 wird im Gegensatz zu dem zuvor beschriebenen Ausführungsbeispiel nicht die Umschaltdrehzahl U, sondern ein Umschaltbereich eingegeben. Die Vergleichslogik 12 vergleicht, ob die aktuelle Drehzahl, die über die Leitung 7 ebenfalls in die Vergleichslogik 12 eingegeben ist, größer oder kleiner ist oder im Umschaltbereich liegt. Liegt die aktuelle Motordrehzahl im Umschaltbereich, entscheidet die Auswertelogik 11, wieviel Regelanteile bzw. Steueranteile zur Geltung kommen sollen. Diese Information wird dem Rechner 3 zugeführt, der dann entweder das RI-Modul 4 oder das EMK-Modul 5 oder entsprechende Anteile von beiden Modulen für eine Regelcharakteristik auswählt. In Betrachtung des Diagramms nach Figur 4 ist erkennbar, daß, je näher die aktuelle Motordrehzahl an die Umschaltdrehzahl U herankommt, je mehr RI-Steueranteile aktiviert werden. Gleichzeitig werden die EMK-Einflüsse langsam abgebaut. Wenn die Drehzahl wieder sinkt, verschieben sich die Anteile in umgekehrter Richtung. Befindet sich die Elektronik im RI-Bereich, wird nur noch selten die Drehzahl gemessen, so daß der Motor einen sehr ruhigen Lauf aufweist. Nähert sich dagegen die Drehzahl wieder dem Übergangsbereich (ÜB), beginnt die EMK-Regelung aktiv zu werden. Unterhalb des Übergangsbereiches wirkt nur die EMK-Regelung. Die in diesem unteren Drehzahlbereich erforderliche Unterbrechung des Motorstromes für die Drehzahlmessung ist jedoch in diesem Drehzahlbereich nicht störend.

## Patentansprüche

1. Einrichtung zur Optimierung des Drehzahlregelverhaltens eines Elektrokleinstmotors für zahnärztliche Zwecke, enthaltend ein erstes Modul (5) zur Regelung der Drehzahl durch EMK-Messung bei abgeschaltetem Motor, gekennzeichnet durch ein zweites Modul (4) zur Regelung der Drehzahl durch RI-Kompensation des inneren Spannungsabfalls des Motors und Mittel (11,12), welche in Abhängigkeit von vorgebbaren Drehzahldaten entscheiden, welches der beiden Module (4,5) die Drehzahlregelung des Motors übernimmt.

2. Einrichtung nach Anspruch 1, enthaltend eine Vergleichslogik (12), in die eine Größe eingebbar ist, die der Umschaltdrehzahl (U) entspricht, bei der vom einen zum andern Modul (4, 5) umgeschaltet wird, wobei in der Vergleichslogik der Istdrehzahl und der Umschaltdrehzahl entsprechende Größen miteinander verglichen werden und in Abhängigkeit von dem am Ausgang der Vergleichslogik (12') anliegenden Status (größer oder kleiner) in einer Auswertelogik (11) über die Ansteuerung des einen oder anderen Moduls (4,5) entschieden wird.

3. Einrichtung nach Anspruch 2, bei der in die Vergleichslogik (12) auch eine Größe, die einer vom Anwender gewünschten maximalen Drehzahl entspricht, eingebbar ist.

4. Einrichtung nach Anspruch 3, bei der die vorgebbaren Daten vom Anwender frei wählbar einstellbar sind.

5. Einrichtung nach Anspruch 4, bei der eine gleitende Umschaltung der Module (4,5) erfolgt, indem, ausgehend von einer festgelegten Umschaltdrehzahl, ein Drehzahlbereich festgelegt ist, innerhalb dem das Modul zur Regelung der Drehzahl dur ch RI-Kompensation aktiviert ist und gleichzeitig auch das Modul zur Regelung der Drehzahl durch EMK-Messung zeitweise, entsprechend einem vorgebbaren Regelanteil, aktiviert wird.

6. Einrichtung nach einem der Ansprüche 1 bis 5, bei der die Regelcharakteristik für die Umschaltung der Module (4,5) in einem Rechner (3) festgelegt ist, der die Endstufe (2) des Motors (1) ansteuert und in den einerseits die für die Errechnung erforderlichen Motordaten und anderseits die Entscheidungen aus der Auswertelogik (11) eingehen.

## Claims

1. Device for optimizing the speed control performance of a miniature electric motor for dental purposes, containing a first module (5) to control the speed by means of e.m.f measurement when the motor is switched off, characterized by a second module (4) to control the speed by means of IP compensation of the internal voltage drop of the motor, and means (11, 12) which, in dependence upon specifiable speed data, decide which of the two modules (4, 5) takes over the speed control of the motor.

2. Device according to claim 1, containing a comparison logic unit (12) into which a variable can be entered which corresponds to the changeover speed (U), where changeover takes place from the one module to the other (4, 5), whereby in the comparison logic unit variables corresponding to the actual speed and the changeover speed are compared with each other and, in dependence upon the status (larger or smaller) present at the output of the comparison logic unit (12'), a decision is made in an evaluation logic unit (11) about the activation of the one module or the other (4, 5).

3. Device according to claim 2, where a variable which corresponds to a maximum speed desired by the user can also be entered into the comparison logic unit (12).

4. Device according to claim 3, where the specifiable data can be adjusted in a freely selectable manner by the user.

5. Device according to claim 4, where a sliding changeover of the modules (4, 5) takes place in that, proceeding from a fixed changeover speed, a speed range is fixed within which the module to control the speed by means of IP compensation is activated and at the same time the module to control the speed by means of e.m.f. measurement is activated at times, corresponding to a specifiable control part.

6. Device according to one of claims 1 to 5, where the control characteristic for the changeover of the modules (4, 5) is fixed in a computer (3) which activates the output stage (2) of the motor (1) and into which on the one hand the motor data necessary for the calculation and on the other hand the decisions from the evaluation logic unit (11) are entered.

## Revendications

1. Dispositif pour optimiser le comportement de régulation de la vitesse de rotation d'un petit moteur électrique destiné à être utilisé dans le domaine dentaire, contenant un premier module (5) servant à réguler la vitesse de rotation par mesure f.é.m. lorsque le moteur est mis hors circuit, caractérisé par un deuxième module (4) servant à réguler la vitesse de rotation par compensation RI de la chute de tension intérieure du moteur et par des moyens (11, 12), qui décident, en fonction de données relatives à la vitesse de rotation pouvant être prescrite, de celui des deux modules (4) ou (5) qui prend en charge la régulation de la vitesse de rotation du moteur.

2. Dispositif suivant la revendication 1, comprenant une logique (12) de comparaison, dans laquelle peut être entrée une valeur qui correspond à la vitesse (U) de rotation de commutation pour laquelle on passe de l'un à l'autre module (4, 5), des valeurs correspondant à la vitesse de rotation réelle et à la vitesse de rotation de commutation étant comparées l'une à l'autre dans la logique de comparaison et, en fonction de l'état (supérieur ou inférieur) présent à la sortie de la logique (12') de comparaison, il est décidé dans une logique (11) d'exploitation de la commande de l'un ou l'autre module (4, 5).

3. Dispositif suivant la revendication 2, dans lequel il peut être entré dans la logique (12) de comparaison aussi une valeur qui correspond à une vitesse de rotation maximum souhaitée par l'utilisateur.

4. Dispositif suivant la revendication 3, dans lequel les données pouvant être prescrites peuvent être établies par le libre choix de l'utilisateur.

5. Dispositif suivant la revendication 4, dans lequel il s'effectue une commutation glissante des modules (4, 5) par le fait que, à partir d'une vitesse de rotation de commutation fixée, il est fixé un domaine de vitesse de rotation dans lequel le module servant à réguler la vitesse de rotation par compensation RI est activé et, en même temps, également le module servant à réguler la vitesse de rotation par mesure f.é.m. est activé périodiquement, suivant une composante de régulation pouvant être prescrite.

6. Dispositif suivant l'une des revendications 1 à 5, dans lequel la caractéristique de régulatiorr prévue pour la commutation des modules (4, 5) est fixée dans un ordinateur (3) qui commande l'étage (2) de sortie du moteur (1) et auquel arrive, d'une part, les données relatives au moteur nécessaires à la détermination par calcul et, d'autre part, les décisions provenant de la logique (11) d'exploitation.
